# EUROPEAN PATENT SPECIFICATION

(11) **EP 0 994 292 B1**
(45) Date of publication and mention of the grant of the patent: **09.08.2006**
(21) Application number: 99203217.7
(22) Date of filing: 01.10.1999
(51) Int. Cl.: F21S 8/00, F21V 17/00, F21S 9/02

(54) **Safety lighting fixture**
Notbeleuchtungseinheit
Système d'éclairage de sécurité

(30) Priority: 14.10.1998 IT MI982207
(43) Date of publication of application: 19.04.2000
(73) Proprietor: Beghelli S.p.A., 40050 Monteveglio, Bologna (IT)
(72) Inventor: Beghelli, Gian Pietro, 40050 Monteveglio (Bologna) (IT)
(74) Representative: Zanardo, Giovanni

(56) References cited:
- EP-A- 0 290 162
- DE-U- 9 110 573
- US-A- 4 337 507
- PATENT ABSTRACTS OF JAPAN vol. 017, no. 660 (M-1522), 7 December 1993 (1993-12-07) & JP 05 217409 A (TOSHIBA LIGHTING & TECHNOL CORP), 27 August 1993 (1993-08-27)

## Description

This invention refers to a safety lighting fixture.

As regards safety lighting, meaning a type of lighting meant to operate when normal lighting fails, a distinction is usually made between stand-by and emergency lighting, depending on the intended purpose.

The purpose of stand-by lighting is to allow pursuing an activity even if the normal lighting fails, without any reference to personnel safety, while that of safety lighting is aimed at ensuring the safety of personnel in case of a normal lighting failure, and may serve multiple needs, including those of signaling exit routes, so as permit to easily and correctly identify and reach an exit route and ensure the safety of working premises where the activity pursued may become hazardous in case of a sudden failure of the normal lighting system.

The premises where safety lighting is mandatory, based on the existing technical regulations, are innumerable and each of them is subject to certain minimum safety lighting standards (usually amounting to 5 lux) and minimum autonomy periods of the safety lighting fixtures to use (usually amounting to 30 minutes or one hour).

Numerous experimental studies have been run to establish the minimum lighting standard capable of allowing the personnel to move about safely under emergency conditions. At the same lighting intensity, moreover, the exiting difficulties grow if the personnel is poorly acquainted with the ambiance and present in a large number; It is therefore particularly important to point out the stepping points, the possible obstructions and changes in direction.

It is further desirable, especially for solutions aimed at wall-type mounting, to utilize fixtures conforming to the rules relating to the lighting intensity at ground level and to the bundling of the light beam (for the purpose of uniformity in particular, a ratio of 40 between maximum and minimum lighting is required), and being at the same time capable of easily identifying any exit routes, so as to allow the personnel to safely follow said routes up to a protected point.

The lighting at a given point of a surface is defined as the ratio of the light flux investing a surface element surrounding that point and the area of the element itself; the lighting can easily be planned and measured by a lighting flux meter or illumination meter, so as to allow it to be easily and conveniently used to handle technical problems, such as for instance for designing a lighting system.

The performance of a safety lighting fixture is generally evaluated by imposing a certain lighting value on a working or usage surface, conventionally consisting of a horizontal plane placed at a certain distance from the floor. When the light reaches said working surface while originating directly from the lighting source (at least 90% of the light flux) the lighting is said to be direct, while if the light reaches the working surface after being reflected, even several times, from the walls and/or the ceiling of the room (at least 90% of the light flux) the lighting is said to be indirect. There are of course most frequently intermediate situations, where the light flux reaches the working surface at certain direct and indirect lighting percentages of values intermediate to those mentioned above.

In particular, the existing standards provide for a minimum lighting of 5 lux at a one-meter height from the walking floor and along the stairs; at least 2 lux are required in any other room.

A lighting fixture according to the preamble of claim 1 is disclosed in US 4337507 A. It may be mounted to a wall or a ceiling.

The purpose of this invention is to indicate a safety lighting fixture capable of changing the shape of the photo-metric light flux, so as to optimize the outgoing light flux, depending on whether the fixture is wall- or ceiling-mounted.

Another purpose of this invention is to indicate a safety lighting fixture conforming to the national and international standards still applicable on the subject. A further purpose of the invention is to produce a safety lighting fixture capable of optimizing the light beam's orientation and intensity on the walking floor, independently on whether the fixture is mounted on the ceiling or on a lateral wall.

Not the last purpose of the invention is to produce a safe and reliable safety lighting fixture, of an essentially simple and relatively economical type in relation to the benefits gained.

These and other purposes of this invention are achieved by producing a safety lighting fixture in accordance with claim 1, which is being referred to for brevity.

In an advantageous manner, the fixture according to the invention ensures a substantially uniform lighting over the walking floor; it also allows achieving relatively concentrated light fluxes within a certain solid corner, in a vertical or transversal direction, while at the same time modifying the shape of the photo-metric light flux of the fixture.

This allows a proper optimization of the light flux emitted from the fixture's diffusing screen, depending on the point of installation.

The characteristics and advantages of a safety lighting fixture according to this invention will become more clearly evident from the exemplifying and non-limiting description which follows, referred to the simplified attached drawings in which:
- Figure 1 is an exploded and partially sectionalized view of a safety lighting fixture, according to the invention;
- Figure 2 is a partially sectionalized side view of a safety lighting fixture, according to the invention;
- Figure 3 is a perspective and partial view of a safety lighting fixture, according to the invention;
- Figure 4 shows an indicative diagram of the distribution of the light flux intensity (photo-metric curve) of a ceiling-mounted safety lighting fixture according to this invention, measured in candles/1000 lumen;
- Figure 5 shows an indicative diagram of the lighting distribution on a walking floor of the ceiling-mounted safety lighting fixture described in Figure 4, measured in lux;
- Figure 6 shows an indicative diagram of the distribution of the light flux intensity (photo-metric curve) of a wall-mounted safety lighting fixture according to this invention, measured in candles/1000 lumen;
- Figure 7 shows an indicative diagram of the distribution of the lighting distribution on a walking floor of an embodiment of the wall-mounted safety lighting fixture described in Figure 6, measured in lux.

With particular reference to the diagrams in the Figures 4-7, these graphs are indicative of the lighting of a fixture installed at a 3-meter height from the floor; moreover, the photo-metric calculation must appropriately consider the dispersion of the sources' light flux values with respect to their nominal values.

With reference to the mentioned figures, 10 generally indicates a safety lighting fixture comprising an outer enclosure or base 11, suitable for wall or ceiling attachment, an appropriately profiled reflecting element 12 associated with the enclosure 11, a lamp holder 13 connected to the reflecting element 12 and a removable transparent screen 15, associated with the enclosure 11 by snap-on hooks 18, capable of diffusing the light radiation originating from a fluorescent lamp 14.

The transparent screen 15 presents a slightly curved front surface, convex toward the outside of the fixture 10 and may on its inner surface be fitted with appropriately shaped prismatic surfaces so as to achieve a suitable refraction of the light source.

The profiled reflecting element 12 exhibits, in some exemplifying but non-limiting embodiments, certain preferably metallized surfaces of a substantially parabolic shape comprising connectors (not shown in the figure) to supply one or two lamps or fluorescent tubes 14, placed essentially at the focal point of the parabolic surface.

In alternative embodiments, the element 12 generally presents areas of opposed extremities 19 having a slight curvature, so as to be associated with and supported by the screen 15 in its portions 31, fitted with flexible hook-ups and devices 32 capable of allowing its removeableconnection to the base 11 of the fixture 10.

In the preferred embodiments, the fixture 10 according to the invention is capable of performing periodical operating tests, tests of autonomy (the recharging time amounts to 12 hours) and for the presence of a network power supply, based on an applications program included in its interior at the source; the test result may be visualized by a multi-colored LED signal placed on the parabolic reflecting element 12 (not shown).

The installation may also be made on normally flammable surfaces, while the enclosure 11 and the screen 15 are preferably constructed of a self-extinguishing plastic material.

The screen 15 may in some versions be utilized as a seat for signaling labels and the lamp or fluorescent tube 14 (of a power generally amounting to 8, 11 18 or 24 Watt) is supplied by an electronic reactor with a high energy saving.

An auxiliary reflecting body 17 of an essentially wedge-type shape may be used to control the light flux when the fixture 10 is wall-mounted.

In particular, the reflecting body 17 is removeable and hooks up to the profiled parabolic element 12 by a quick-fitting system, generally consisting of some snap-on hooks 16 engaging with some surfaces provided on the profiled element 12, opposite an area located above the lamp 14.

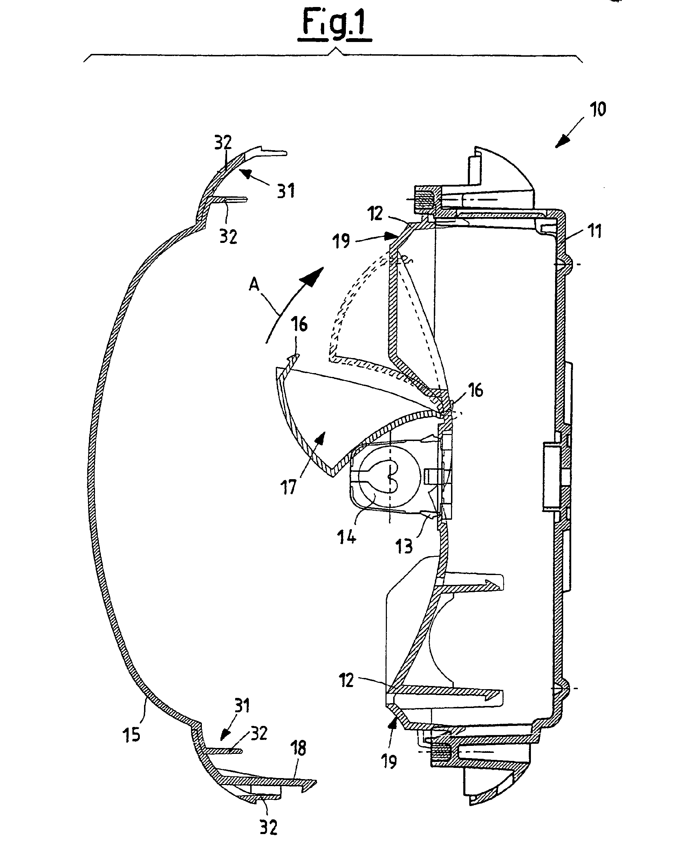

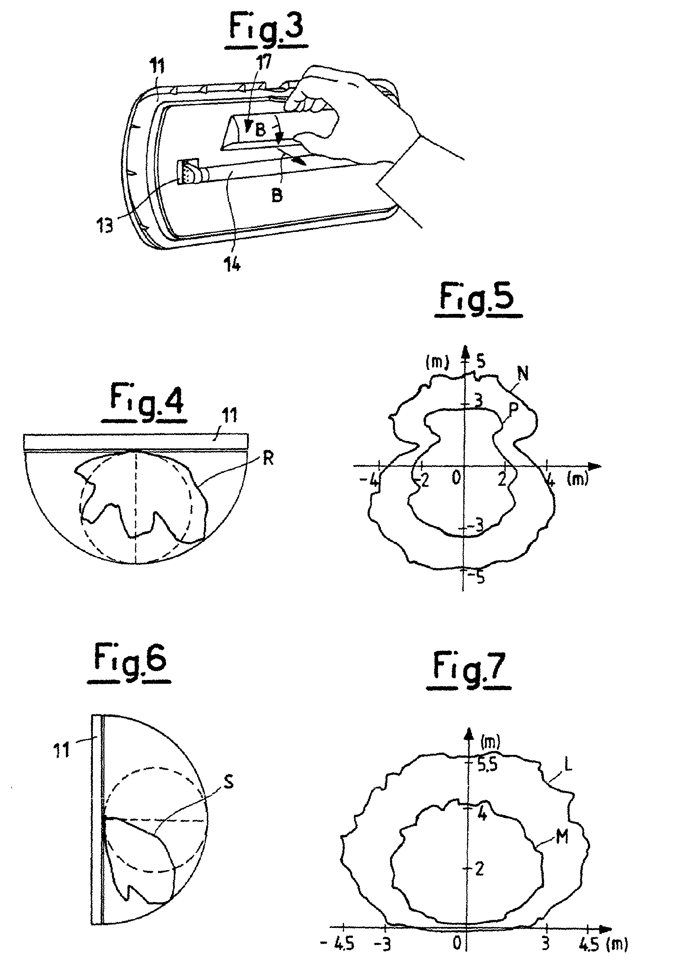

The Figures 1 and 3 indicate the motions needed to attach (arrow A of Figure 1) or detach (arrows B of Figure 3) the body 17 from the seats (not shown) of the reflecting element 12; it is evident that the light diffusion from a ceiling-mounted fixture 10 occurs in the absence of a wedge-shaped body 17, while in the case of a wall-mounted fixture the special geometry of the body 17 allows to suitably direct the light beam, so as to optimize the orientation of the light beam to the walking floor, thanks to this dedicated optic system.

In a preferential manner, the curved wall 40 of the wedge-shaped body 17, which in the case of a wall-mounted fixture 10 comes after being inserted to overlay the surface of the profiled reflecting element 12 while modifying its geometric shape, allows achieving some reflections of the light beam inside a restricted cone of light, with respect to the diffused cone of light achievable by removing the body 17 (in a ceiling-mounted fixture).

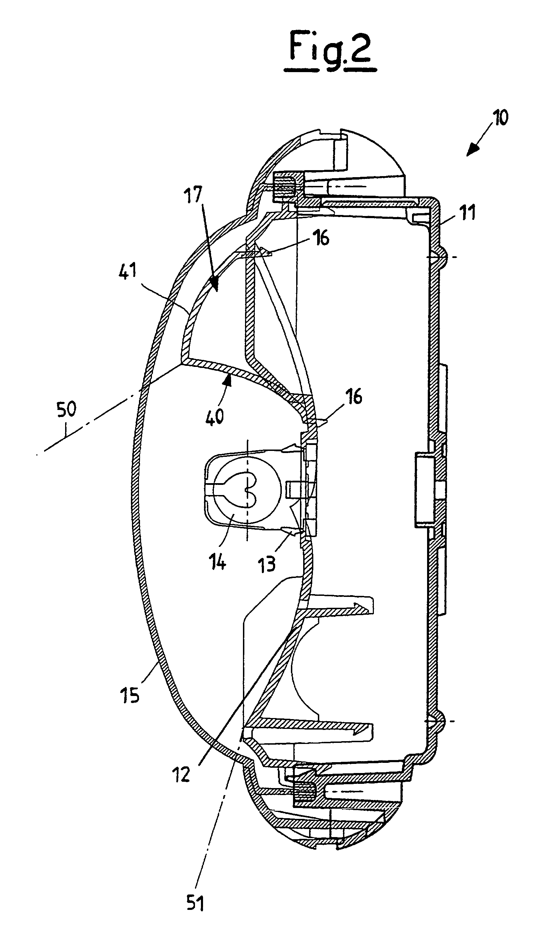

In particular, the cone of light turns out to be contained within two limiting beams 50 and 51, indicated by a dashed and dotted line in Figure 2, which form an apex angle comprised between 0 and 90 sexagesimal degrees, and preferably equal to 30 or 45 sexagesimal degrees.

It is possible, by suitably designing the geometric shape of the walls 40 and 41 of the wedge-shaped body 17, to focus the outgoing light beam toward certain desired directions, and to modify the shape of the photo-metric light flux of the fixture 10 on the walking floor at will.

This structure has been the subject of studies as regards the lighting distribution, the exit light beam and the distribution of lighting intensity obtained at a distance, both for ceiling-mounted and wall-mounted installations.

In particular, some experiments were conducted in which a safety lighting fixture 10 comprising a fluorescent light tube 14 with a power of 8 W was mounted on the ceiling or on the a wall of a room. When the tube 14 was supplied from a 230 Volt network, at an ambient temperature of 23°C, it was found that at a distance of three meters the lighting power of the wall-mounted fixture 10 turned out to be of about two lux within an essentially circular area of about 45 m² (circumscribed by the line L of Figure 7) and of three lux within an essentially circular area of about 20 m² (circumscribed by the line M of Figure 7).

In the same manner, at a distance of three meters the lighting of a ceiling-mounted fixture 10 turned out to be of about two lux within an essentially 8-shaped area of about 45 m² (circumscribed by the line N of Figure 5) and of three lux with in essentially 8-shaped area of about 20 m² (circumscribed by the line P of Figure 5).

The measured data referring to the lighting distribution on a walking floor placed at a distance of three meters form the light source are shown in the diagrams of Figure 4 and Figure 6, which refer to a ceiling-mounted and a wall-mounted installation of the fixture 10, respectively; the distribution of lighting intensity, measured in candles/1000 lumen, turned out to be 103 (line R in Figure 4) and 138 (line S in Figure 6) candles/1000 lumen, depending on whether the fixture 10 was ceiling- or wall-mounted.

As can be derived from the diagrams in the Figures 4-7, the fixture 10 according to the invention allows to achieve an essentially uniform and concentrated lighting distribution, even if installed at a considerable distance from the walking floor. Moreover, it allows achieving a variable outgoing photo-metric light flux, depending on whether the fixture 10 is wall- or ceiling-mounted.

In the wall-mounted case the wedge-shaped body 17 allows achieving photo-metric performances of a controlled exit light flux, so as to effectively signal, under any circumstances, some escape routes, hazardous or emergency situations.

It is evident that numerous other variants may be applied to the safety lighting fixture object of this invention, without thereby abandoning the innovative principles inherent in the inventive idea, just as it is evident that in a practical implementation of the invention the materials, shapes and dimensions of the illustrated details may be of any kind, depending on the requirements, and that the same may be substituted by others of a technically equivalent type.

## Claims

1. A safety lighting fixture (10), comprising an outer base or enclosure (11) suitable for wall or ceiling installation, associated with at least one profiled reflecting element (12) and a transparent diffusion screen (15), capable of diffusing a light flux of at least one light source (14) toward the outside, **characterized in that,** only if said fixture (10) is wall-mounted, a supplementary reflecting body (17) is provided, opposite at least one portion of said reflecting element (12), and profiled in such a manner as to attain a controlled photo-metric performance on a walking floor at a distance from said light source (14).

2. A safety lighting fixture (10) according to claim 1, **characterized in that** said reflecting body (17) comprises certain portions of curved reflecting surfaces (40, 41) associated with each other, so as to bundle said light flux within a diffusion cone.

3. A safety lighting fixture (10) according to claim 2, **characterized in that** said diffusion cone is circumscribed by at least two limiting beams (50, 51) and presents an apex angle comprised within a range of 0-90 sexagesimal degrees, and preferably equal to 30 or 45 sexagesimal degrees.

4. A safety lighting fixture (10) according to claim 1, **characterized in that** said light source (14) is constituted by a lamp or fluorescent tube.

5. A safety lighting fixture (10) according to claim 1, **characterized in that** said reflecting body (17) is detachably connected to certain areas (19) of said profiled element (12) and can be engaged in seats by using snap-on hooks (16).

6. A safety lighting fixture (10) according to claim 1, **characterized in that** said supplementary reflecting body (17) is substantially wedge-shaped and can be installed in a portion of the profiled reflecting element (12) arranged above said light source (14) if said fixture (10) is wall-mounted.

7. A safety lighting fixture (10) according to claim 1, **characterized in that** it exhibits, at the distance of three meters and in a wall-mounted version, a lighting power of about two lux within a substantially circular surface area of about 45 m² and of three lux within a substantially circular surface area of about 20 m².

8. A safety lighting fixture (10) according to claim 1, **characterized in that** it exhibits, at the distance of three meters and in a ceiling-mounted version, a lighting power of about two lux within a substantially 8-shaped surface area of about 45 m² and of three lux within a substantially 8-shaped surface area of about 20 m² .

9. A safety lighting fixture (10) according to claim 1, **characterized in that** it exhibits a distribution of lighting intensity, on a walking floor set at a distance of about three meters from said light source (14), of substantially 103 candles/1000 lumen in a ceiling-mounted version and of substantially 138 candles/1000 lumen in a wall-mounted version.

## Patentansprüche

1. Notbeleuchtungs-Befestigungseinrichtung (10), die eine äußere Basis oder Einfassung (11) umfasst, die für einen Wand- oder Deckenanbau geeignet ist, und zu der mindestens ein mit einem Profil versehenes Reflexionselement (12) und ein lichtdurchlässiger Diffusionsschirm (15) gehört, der einen Lichtstrom von mindestens einer Lichtquelle (14) zu der Außenseite hin streuen kann, **dadurch gekennzeichnet, dass** nur dann, wenn die Befestigungseinrichtung (10) an einer Wand montiert ist, ein zusätzlicher Reflexionskörper (17) gegenüber mindestens einem Abschnitt des Reflexionselements (12) vorgesehen ist und auf solch eine Weise mit einem Profil versehen ist, dass auf einem Fußboden in einer Entfernung von der Lichtquelle (14) eine gesteuerte fotometrische Leistung erreicht wird.

2. Notbeleuchtungs-Befestigungseinrichtung (10) nach Anspruch 1, **dadurch gekennzeichnet, dass** der Reflexionskörper (17) bestimmte Abschnitte gebogener Reflexionsflächen (40, 41), die zueinander gehören, umfasst, um den Lichtstrom in einem Diffusionskonus zu bündeln.

3. Notbeleuchtungs-Befestigungseinrichtung (10) nach Anspruch 2, **dadurch gekennzeichnet, dass** der Diffusionskonus von mindestens zwei Begrenzungsstrahlen (50, 51) umgeben ist und einen Öffnungswinkel, der in einem Bereich von 0 - 90 Sexagesimalgrad liegt und vorzugsweise gleich 30 oder 45 Sexagesimalgrad ist, aufweist.

4. Notbeleuchtungs-Befestigungseinrichtung (10) nach Anspruch 1, **dadurch gekennzeichnet, dass** die Lichtquelle (14) durch eine Lampe oder Fluoreszenzröhre gebildet ist.

5. Notbeleuchtungs-Befestigungseinrichtung (10) nach Anspruch 1, **dadurch gekennzeichnet, dass** der Reflexionskörper (17) abnehmbar mit bestimmten Bereichen (19) des mit einem Profil versehenen Elements (12) verbunden ist und durch Verwenden von Schnapphaken (16) in Sitzen in Eingriff gebracht werden kann.

6. Notbeleuchtungs-Befestigungseinrichtung (10) nach Anspruch 1, **dadurch gekennzeichnet, dass** der zusätzliche Reflexionskörper (17) im Wesentlichen keilförmig ist und in einen Abschnitt des mit einem Profil versehenen Reflexionselements (12) eingebaut werden kann, der über der Lichtquelle (14) angeordnet ist, wenn die Befestigungseinrichtung (10) an einer Wand montiert ist.

7. Notbeleuchtungs-Befestigungseinrichtung (10) nach Anspruch 1, **dadurch gekennzeichnet, dass** sie in der Entfernung von drei Metern und in einer an einer Wand montierten Version eine Beleuchtungsstärke von etwa zwei Lux in einem im Wesentlichen kreisförmigen Flächenbereich von etwa 45 m² und drei Lux in einem im Wesentlichen kreisförmigen Flächenbereich von etwa 20 m² aufweist.

8. Notbeleuchtungs-Befestigungseinrichtung (10) nach Anspruch 1, **dadurch gekennzeichnet, dass** sie in der Entfernung von drei Metern und in einer an einer Decke montierten Version eine Beleuchtungsstärke von etwa zwei Lux in einem im Wesentlichen 8-förmigen Flächenbereich von etwa 45 m² und drei Lux in einem im Wesentlichen 8-förmigen Flächenbereich von etwa 20 m² aufweist.

9. Notbeleuchtungs-Befestigungseinrichtung (10) nach Anspruch 1, **dadurch gekennzeichnet, dass** sie auf einem Fußboden in einer Entfernung von etwa drei Metern von der Lichtquelle (14) eine Beleuchtungsintensitätsverteilung von im Wesentlichen 103 Candela/1000 Lumen in einer an einer Decke montierten Version und von im Wesentlichen 138 Candela/1000 Lumen in einer an einer Wand montierten Version aufweist.

## Revendications

1. Système de fixation d'éclairage de sécurité (10), comprenant une base ou boîtier externe (11) adaptée à une installation murale ou au plafond associée à au moins un élément profilé de réflecteur (12) et à un écran transparent de diffusion (15), pouvant diffuser un flux lumineux d'au moins une source de lumière (14) vers l'extérieur, **caractérisé en ce que** seulement si ledit système de fixation (10) est monté sur le mur, un corps supplémentaire de réflexion (17) est prévu en opposition à au moins une partie dudit élément de réflecteur (12) et profilé de façon à atteindre une capacité photométrique commandée sur un plancher de passage à une certaine distance de ladite source de lumière (14).

2. Système de fixation d'éclairage de sécurité (10) selon la revendication 1, **caractérisé en ce que** ledit corps de réflexion (17) comprend certaines parties de surfaces incurvées de réflexion (40, 41) mutuellement associées afin de créer un faisceau dudit flux de lumière dans un cône de diffusion.

3. Système de fixation d'éclairage de sécurité (10) selon la revendication 2, **caractérisé en ce que** ledit cône de diffusion est circonscrit par au moins deux faisceaux de limitation (50, 51) et présente un angle au sommet compris dans un intervalle de 0 à 90 degrés sexagésimaux et de préférence égal à 30 ou 40 degrés sexagésimaux.

4. Système de fixation d'éclairage de sécurité (10) selon la revendication 1, **caractérisé en ce que** ladite source de lumière (14) est constituée d'une lampe ou d'un tube fluorescent.

5. Système de fixation d'éclairage de sécurité (10) selon la revendication 1, **caractérisé en ce que** ledit corps de réflexion (17) est connecté, de façon amovible, à certaines zones (19) dudit élément profilé (12) et peut être engagé dans des sièges à l'aide de crochets d'encliquetage (16).

6. Système de fixation d'éclairage de sécurité (10) selon la revendication 1, **caractérisé en ce que** ledit corps supplémentaire de réflexion (17) est sensiblement en forme de coin et peut être placé dans une partie de l'élément profilé de réflexion (12) disposée au dessus de ladite source de lumière (14) si ledit système de fixation (10) est monté sur un mur.

7. Système de fixation d'éclairage de sécurité (10) selon la revendication 1, **caractérisé en ce qu'**il présente, à la distance de 3 mètres et dans la version à montage mural, une puissance lumineuse d'environ 2 lux dans une zone de surface sensiblement circulaire d'environ 45 m² et de 3 lux dans une zone de surface sensiblement circulaire d'environ 20 m².

8. Système de fixation d'éclairage de sécurité (10) selon la revendication 1, **caractérisé en ce qu'**il présente, à la distance de 3 mètres et dans la version à montage au plafond, une puissance lumineuse d'environ 2 lux dans une zone de surface sensiblement en forme de 8 d'environ 45 m² et de 3 lux dans une zone de surface sensiblement en forme de 8 d'environ 20 m².

9. Système de fixation d'éclairage de sécurité (10) selon la revendication 1, **caractérisé en ce qu'**il présente une répartition de l'intensité de lumière sur un plancher de passage placé à une distance d'environ 3 mètres de ladite source de lumière (14) d'environ 103 candela/1000 lumen dans une version à montage au plafond et de sensiblement 138 candela/1000 lumen dans une version à montage mural.
